# EUROPÄISCHE PATENTSCHRIFT

(11) **EP 1 051 828 B1**
(45) Veröffentlichungstag und Bekanntmachung des Hinweises auf die Patenterteilung: **24.05.2006**
(21) Anmeldenummer: 99904713.7
(22) Anmeldetag: 13.01.1999
(51) Int. Cl.: H04M 3/00, H04M 19/00

(54) **VERFAHREN ZUM ABGLEICH VON UM STÖRGRÖSSEN VERFÄLSCHTE STROMWERTE EINES TEILNEHMERSATZES**
METHOD FOR COMPENSATING CURRENT VARIABLES OF A SUBSCRIBER CIRCUIT WHICH HAVE BEEN MODIFIED BY DISTURBANCE VARIABLES
PROCEDE POUR COMPENSER DES VALEURS DE COURANT D'UN GROUPE D'ABONNES, FAUSSEES PAR DES VALEURS D'INFLUENCE

(30) Priorität: 26.01.1998 DE 19802826
(43) Veröffentlichungstag der Anmeldung: 15.11.2000
(73) Patentinhaber: SIEMENS AKTIENGESELLSCHAFT, 80333 München (DE)
(72) Erfinder: KRIMMER, Roland, D-82110 Germering (DE); DOLLINGER, Rudolf, D-81243 München (DE)
(86) Internationale Anmeldenummer: PCT/DE1999/000066
(87) Internationale Veröffentlichungsnummer: WO 1999/038308

(56) Entgegenhaltungen:
- WO-A-96/27970
- WO-A-98/08336
- INABE Y ET AL: "A TWO-CHIP SET FOR SLIC" REVIEW OF THE ELECTRICAL COMMUNICATION LABORATORIES, Bd. 36, Nr. 6, 1. November 1988 (1988-11-01), Seiten 561-565, XP000031856

## Beschreibung

Die Erfindung betrifft ein Verfahren zum Abgleich von um Offsetstromwerte verfälschte Stromwerte eines innerhalb einer digitalen Fernsprechvermittlungsstelle befindlichen Teilnehmersatzes.

Ein solches Abgleichverfahren ist bisher in Form eines Offsetstromabgleichverfahrens bekannt.

Der Stromfluß auf den Adern einer zu einem Teilnehmersatz führenden Teilnehmerleitung wird mittels mindestens je einem Relais unterbrochen. Nach einer solchen Unterbrechung wird der Offsetstromwert des Teilnehmersatzes mittels eines den Teilnehmersatz steuernden Prozessors in der Art bestimmt, daß der Offsetstrom mehrmals gemessen, aus den gemessenen Offsetstromwerten ein Mittelwert gebildet und das Ergebnis in einem zum Prozessor gehörenden Speicher abgelegt wird. Wenn im Normalbetrieb eine Strommessung z.B. für eine Prüfung der Funktionsfähigkeit des Teilnehmersatzes oder für eine Einstellung des Speisestroms einer Teilnehmerleitung, getätigt wird, wird die Strommessung in annähernd gleicher Weise vorgenommen und dabei das Ergebnis um den Offsetstromwert korrigiert.

Das Verfahren ist deswegen nachteilig, weil sowohl das Verfahren zu einer im Normalbetrieb getätigten Strommessung als auch der Abgleich des vorher bestimmten Offsetstromwerts in der Firmware des den Teilnehmersatz steuernden Prozessors integriert ist. Da die Stromwerte üblicherweise im µA-Bereich exakt bestimmt werden sollen, ist eine möglichst hohe Abtastrate solcher Strommessungen erwünscht. Die Firmware des den Teilnehmersatz zu steuernden Prozessors ist jedoch in der Weise beschaffen, daß die Abtastrate von beispielsweise 1 kHz bei diesem Verfahren nicht mehr erhöht werden kann.

Ein weiterer Nachteil dieses Verfahrens ist darin zu sehen, daß im Teilnehmersatz eine vorhandene Störgröße wie z.B. der Offsetstrom bei einer Strommessung lediglich firmware-mäßig beseitigt wird, jedoch im Teilnehmersatz noch vorhanden ist.

Das bedeutet, daß beispielsweise eine Einstellung des Speisestroms im Niedervoltteil des Teilnehmersatzes, dessen Wert bezogen auf die Adern der Teilnehmerleitung üblicherweise im Bereich von ungefähr 25 mA liegt, insofern erheblich erschwert wird, als daß der im Niedervoltteil vorhandene Offsetstromwert den Speisestromwert um ca. 1 mA verfälscht.

Ein im Zusammenhang mit einem Teilnehmersatz stehendes Stromspannungsabgleichverfahren ist durch die internationale Veröffentlichung WO-A-96/27970 bekannt. Der in dieser Veröffentlichung offenbarte Gegenstand beschreibt eine DC-Kontrollschaltung, die einen Tiefpaßfilter zur Erkennung von DC-Spannungsschwankungen, einen Wandler zur Auswertung eines inkrementalen Signals, ein Schwellenwerterkennungsglied zur Aktivierung von Ausgleichsfunktionen und einen Akkumulator umfaßt, um eine DC-Ausgleichsspannung mit Hilfe inkrementierender Schritte zu erzeugen. Diese DC-Ausgleichsspannung wird in ein analoges Ausgleichssignal umgewandelt und dann wird dieses von einer für einen Verstärker innerhalb eines sogenannten SLICs bestimmten Eingangsspannung substrahiert, um eine DC-Spannungsschwankung auszugleichen. Bei diesem Vorgehen können die in den SLIC eingehenden Spannungsschwankungen ausgeglichen werden. Aufgrund der andersartig gelagerten Verhältnisse für eingehende Spannungsschwankungen gegenüber denen für im Teilnehmersatz vorhandende Offsetströme ist eine Anwendung des bekannten Ausgleichverfahrens auf den Abgleich von um Offsetströme verfälschte Stromwerte als ungeeignet anzusehen.

Die Aufgabe der Erfindung besteht nun darin, die oben erwähnten Nachteile des eingangs erläuterten Abgleichverfahrens zu beseitigen.

Diese Aufgabe wird durch die im Anspruch 1 angegebenen Mittel gelöst.

Die Erfindung löst das ihr gestellte Problem insbesondere dadurch, daß sowohl das Strommeßverfahren als auch das Abgleichverfahren in den Niedervoltteil des Teilnehmersatzes integriert sind. Ein vorher gemessener Offsetstromwert von zum Teilnehmersatz gehörenden elektronischen Bauteilen wird dabei mit umgekehrtem Vorzeichen im Niedervoltteil des Teilnehmersatzes gespeichert und bei einer im Normalbetrieb vorzunehmenden Strommessung im Niedervoltteil z.B. für eine Prüfung des Teilnehmersatzes oder des Speisestroms dem zu messenden Strom aufaddiert.

Dadurch gehen in die Strommessung nur Stromwerte ein, die um Offsetstromwerte bereits korrigiert sind. Das ist deshalb vorteilhaft, da einerseits die der Strommessung nachstehende Korrektur um den Offsetstromwert entfällt und andererseits eine Einstellung eines Stromwertes, beispielsweise den eines Speisestroms, ohne Einfluß eines Offsetstromes erheblich einfacher vorgenommen werden kann.

Außerdem wird durch das erfindungsgemäße Vorgehen ein weiterer Vorteil dadurch erzielt, daß bei einer Strommessung eine höhere Abtastrate erreicht werden kann. Dies geschieht dadurch, daß das Strommeßverfahren nicht mehr in der Firmware des den Teilnehmersatz steuernden Prozessors implementiert ist, sondern mittels der Hardware des Niedervoltteils realisiert wird.

Ferner ist die Speicherung des Offsetstromwertes im Niedervoltteil derart vorteilhaft konzipiert, daß der Offsetstromwert von außen eingestellt werden kann. Durch eine entsprechende Anpassung des Offsetstromwertes, kann in manchen Fällen eine nachträgliche Justierung des Strommeßverfahrens vermieden werden.

Nachstehend wird ein Ausführungsbeispiel der Erfindung unter Bezugnahme auf eine Zeichnung näher beschrieben.

In der Zeichnung zeigen:
Figur 1 die Systemarchitektur einer Fernsprechvermittlungsstelle, deren Teilkomponente ein Teilnehmersatz ist.
Figur 2 eine detailliertere Darstellung eines Teilnehmersatzes, auf den das erfindungsgemäße Abgleichverfahren angewandt wird.

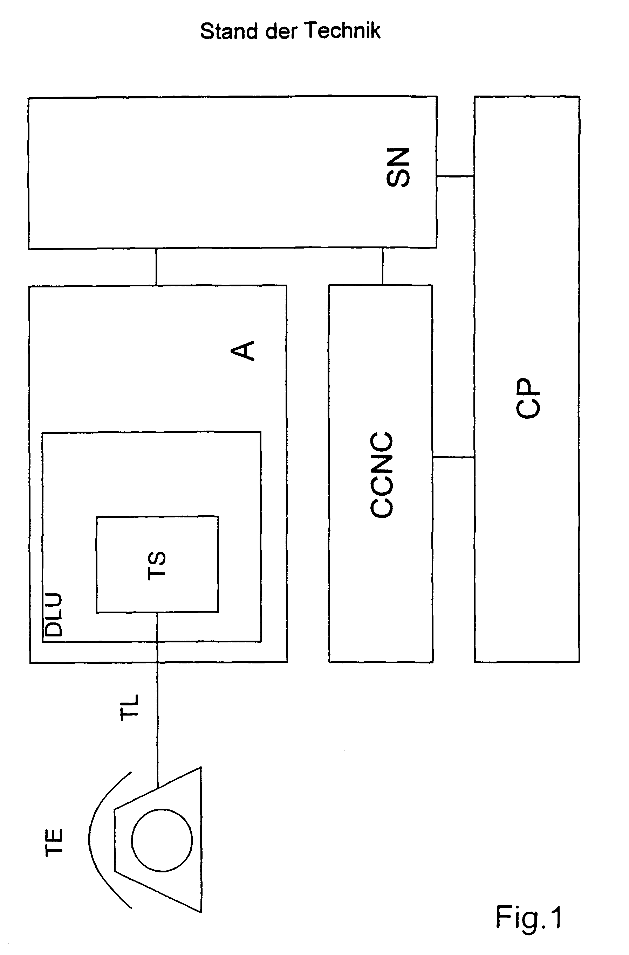

In der Figur 1 sind die zentralen Komponenten einer digitalen Zeitmultiplex-Fernsprechvermittlungsstelle dargestellt. Solche Komponenten sind ein Koppelnetz SN, eine Zeichengabesteuerung CCNC, ein Koordinationsprozessor CP und der Anschlußbereich A. Der Anschlußbereich A enthält mehrere digitale Teilnehmerleitungseinheiten DLU, an die über Teilnehmerleitungen TL entweder direkt oder mittels einer Nebenstellenanlage Teilnehmerendgeräte, die in der Figur 1 symbolisch mit einem Telefon TE gekennzeichnet sind, angeschlossen sind.

Die Teilnehmerleitungseinheit enthält unter anderem mehrere Teilnehmersätze, die die Schnittstelle zwischen den Teilnehmerleitungen und der digitalen Umgebung der Fernsprechvermittlungsstelle bilden.

In Figur 1 ist ein solcher Teilnehmersatz TS dargestellt, der dem Anschluß einer analogen Teilnehmerleitung TL dient und von dem aus über weitere hier nicht dargestellte Teilkomponenten des Anschlußbereichs eine Verbindung mit dem Koppelfeld SN besteht.

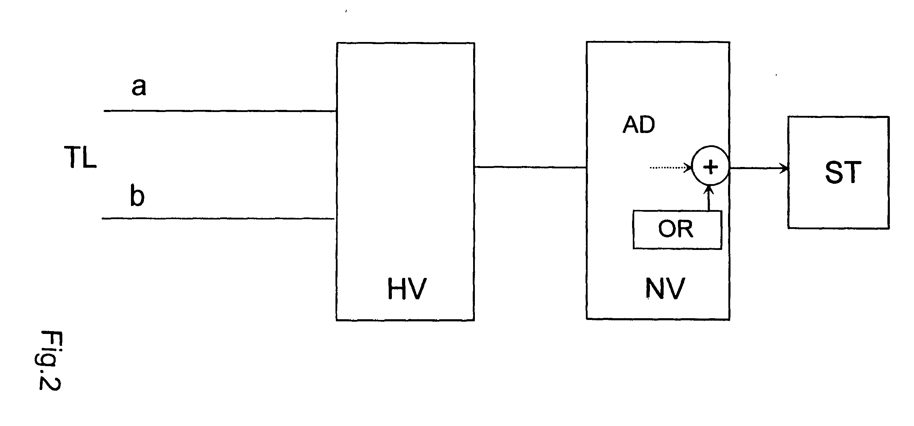

Wie in Figur 2 erkennbar besteht ein solcher Teilnehmersatz, an dem die Adern a und b der Teilnehmerleitung TL angeschlossen sind, aus zwei zentralen Teilen, einem Hochvoltteil HV und einem nachgeschalteten Niedervoltteil NV. Ein solcher Hochvoltteil beinhaltet in erster Linie Leitungstreiber sowie Elemente zur Teilnehmerleitungszustandsindikation. Vom Niedervoltteil aus, der im wesentlichen Elemente zur Analog/Digital-Wandlung, zur 2-Draht-4-Draht-Wandlung und einen Signalprozessor enthält, besteht eine Verbindung zu einem den Teilnehmersatz steuernden Prozessor ST.

Wenn im Normalbetrieb eine Strommessung z.B. zur Einstellung des Speisestroms oder zur Prüfung der Funktionsfähigkeit des Teilnehmersatzes durchgeführt wird, dann wird im Niedervoltteil den zu messenden Strömen ein vorher bestimmter und mit umgekehrtem Vorzeichen im Register OR gespeicherter Offsetstromwert aufaddiert. Eine solche Aufaddierung wird in der Figur 2 mit Hilfe des mit AD gekennzeichneten Kreises dargestellt. Somit gehen nur Ströme, die um den Offsetstromwert abgeglichen sind, in die Strommessung ein. Da die Strommessung in der Regel in der Weise abläuft, daß ein endgültiger Stromwert mittels mehrmaligen Messens und anschließender Mittelwertsbildung ermittelt wird, werden die Ströme vorzugsweise mit einer erhöhten Abtastrate von beispielsweise 2 kHz gemessen.

Wie zuvor bereits erwähnt, wird das erfindungsgemäße Abgleichverfahren inbesondere für einen Offsetstromabgleich der Bestandteile eines Teilnehmersatzes verwendet. Hierbei wird als zu korrigierende Störgröße ein vorher bestimmter Offsetstromwert mit umgekehrtem Vorzeichen im Niedervoltteil gespeichert.

## Patentansprüche

1. Verfahren zum Abgleich von um Offsetstromwerte verfälschte Stromwerte eines innerhalb einer digitalen Fernsprechvermittlungsstelle befindlichen Teilnehmersatzes,
a) der aus einem Hochvoltteil (HV), der vor allem Leitungstreiber und Elemente zur Teilnehmerleitungsindikation beinhaltet, und aus einem Niedervoltteil (NV), der im wesentlichen als Analog/Digital-Schnittstelle dient, die 2-Draht-4-Draht-Wandlung realisiert sowie einen Signalprozessor enthält, besteht,
b) wobei bei Vorliegen eines Offsetstromes dessen Wert im Niedervoltteil gemessen und mit umgekehrten Vorzeichen im Niedervoltteil gespeichert wird
c) und bei einer im Normalbetrieb vorzunehmenden Strommessung im Niedervoltteil, insbesondere zum Zwecke einer Teilnehmersatzprüfung oder zum Zwecke der Einstellung eines Speisestroms, dem zu messenden Strom zur Korrektur aufaddiert wird.

## Claims

1. Method for adjusting current values of a subscriber circuit located within a digital telephone exchange corrupted by offset current values,
a) which consists of a high voltage element (HV) containing above all line drivers and elements for subscriber line indication, and a low voltage element (NV) which serves essentially as an analogue/digital interface implementing 2-4 wire conversion and containing a signal processor,
b) in which if an offset current is present, its value is measured in the low voltage element and is stored with the opposite sign in the low voltage element
c) and with a current measurement in the low voltage element to be undertaken in the normal operation, in particular for the purpose of a subscriber circuit test or for the purpose of adjusting a supply current, it is added to the current to be measured for correction.

## Revendications

1. Procédé de réglage de valeurs de courant faussées, de valeurs de courant de décalage, d' un groupe d'abonnés se trouvant dans un central téléphonique numérique,
a) qui est constitué d'une partie (HV) haute tension, qui contient surtout des circuits d'attaque de lignes, et des éléments d'indication de lignes à l'abonné et d'une partie (NV) basse tension, qui sert essentiellement d'interface analogique/numérique et qui réalise la transformation 2fils-4fils, ainsi qu'un processeur de signal,
b) dans lequel, en présence d'un courant de décalage, on en mesure la valeur dans la partie basse tension et on la mémorise avec inversion de signe dans la partie basse tension,
c) et pour une mesure de courant, s'effectuant en fonctionnement normal, dans la partie basse tension, notamment en vue d'un contrôle du groupe d'abonnés ou en vue du réglage d'un courant d'alimentation, on l'ajoute pour la correction au courant à mesurer.
